(19) Europäisches Patentamt
European Patent Office
Office européen des brevets

(11) **EP 2 980 642 A1**

(12) **EUROPEAN PATENT APPLICATION**
published in accordance with Art. 153(4) EPC

(43) Date of publication:
**03.02.2016 Bulletin 2016/05**

(51) Int Cl.:
**G02F 1/31** *(2006.01)*  **G02F 1/13** *(2006.01)*

(21) Application number: **14859427.8**

(22) Date of filing: **28.10.2014**

(86) International application number:
**PCT/JP2014/005445**

(87) International publication number:
**WO 2015/068356 (14.05.2015 Gazette 2015/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.11.2013 JP 2013232319**

(71) Applicants:
• **Nippon Telegraph and Telephone Corporation Tokyo 100-8116 (JP)**
• **NTT Electronics Corporation Yokohama-shi Kanagawa 221-0031 (JP)**

(72) Inventors:
• **SUZUKI, Kenya Musashino-shi, Tokyo 180-8585 (JP)**

• **SENO, Kazunori Musashino-shi, Tokyo 180-8585 (JP)**
• **ISHII, Yuzo Musashino-shi, Tokyo 180-8585 (JP)**
• **HADAMA, Koichi Musashino-shi, Tokyo 180-8585 (JP)**
• **OOBA, Naoki Yokohama-shi, Kanagawa 221-0031 (JP)**

(74) Representative: **TBK Bavariaring 4-6 80336 München (DE)**

(54) **OPTICAL SWITCH**

(57) An optical switch with a flat transmission property is provided. The optical switch includes an input port, an output port, a diffractive grating configured to perform wavelength demultiplexing on an optical signal from the input port, and LCOS configured to deflect the wavelength-demultiplexed optical signal to the output port. The diffractive grating is pre-arranged such that a shape of the optical signal as entering the LCOS is asymmetric with respect to an axis in the LCOS surface that is orthogonal to a wavelength axis of the diffractive grating.

**FIG.15A**

## Description

Technical Field

The present invention relates to a wavelength selective switch used for an optical communication network.

Background Art

With an explosive spread of data communication networks such as the Internet, there has been an increasingly growing demand for an increase in the capacity of the network. To deal with such an increase in network demands, wavelength division multiplexing communication has been put to practical use. In recent years, there has also been a growing demand for wavelength selective switches (WSS) that enable route switching according to wavelength. A conventional wavelength selective switch is disclosed in Patent Literature 1.

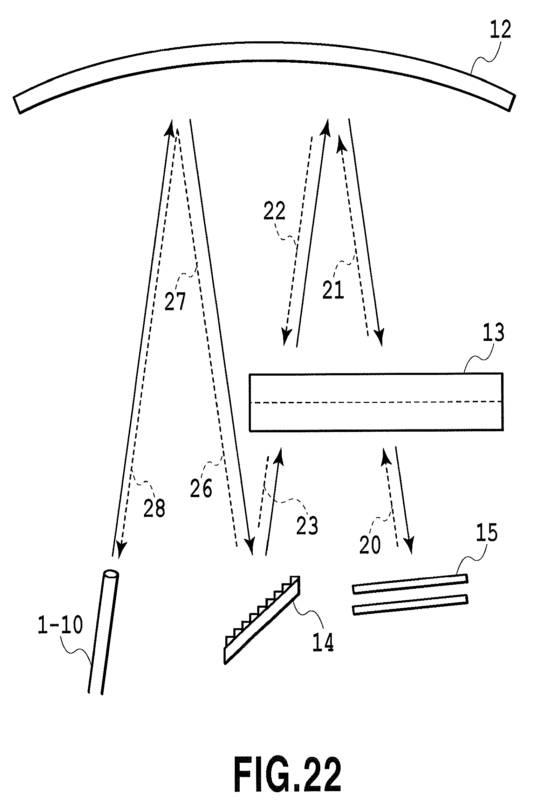

Fig. 22 is a diagram showing an example of the wavelength selective switch disclosed in Patent Literature 1. In FIG. 22, a wavelength division multiplexing signal input through one of input and output optical fibers 1 to 10 propagates while diverging along an outgoing optical path 28 indicated by a solid line. The signal is then converted parallel light by a concave mirror 12, which travels along an outgoing optical path 27 to enter a diffraction grating 14. The wavelength division multiplexing signal entering the diffraction grating 14 undergoes angular dispersion by the diffraction grating 14. The signal is diffracted in directions corresponding to different wavelengths and propagates along an optical path 23 in a direction indicated by a solid line. The propagating optical signal is converted by a cylinder lens 13 into a focused beam in a direction perpendicular to the sheet of Fig. 22. The focused beam enters the concave mirror 12. At this time, the focused beam enters the concave mirror as parallel light in a wavelength demultiplexing direction (the horizontal direction in the sheet of Fig. 22) and as a converged beam in a switch axis direction (the direction perpendicular to the sheet of Fig. 22). Thus, a beam waist is formed on the concave mirror 12.

The optical signal reflected from the concave mirror 12 then propagates as a divergent beam and enters the cylinder lens 13 again, where the divergent beam is converted into parallel light. The parallel light enters a spatial deflection element 15. On the other hand, the parallel light travels as a focused beam in the wavelength demultiplexing direction (the horizontal direction in the sheet of Fig. 22) and is reflected by the concave mirror 12. The focused beam then continues to propagate to the spatial deflection element 15.

In recent years, in order to improve wavelength controllability, a spatial deflection element such as LCOS (Liquid Crystal on Silicon) which uses a large number of pixels has been used as the spatial deflection element 15.

Citation List

Patent Literature

PTL 1: US Patent No. 7092599

Summary of Invention

Technical Problem

When LCOS is used as a spatial deflection element, gaps between pixels in the element are finite, and thus, light entering these areas is lost.

The present invention has been developed in view of the above-described circumstances. An object of the present invention is to provide an optical switch with an appropriate wavelength property.

Solution to Problem

To solve the problem, the present invention includes at least one input port, at least one output port, wavelength demultiplexing section configured to perform wavelength demultiplexing on an optical signal from the input port, and a spatial light modulating section configured to deflect the wavelength-demultiplexed optical signal to the output port. The wavelength demultiplexing section is pre-arranged such that a shape of the optical signal of entering the spatial light modulating section is asymmetric with respect to an axis in the surface of the spatial light modulating section, the surface being orthogonal to a wavelength axis of the wavelength demultiplexing section.

Here, the spatial light modulating section may be a spatial phase modulating element with a plurality of pixels.

An intensity distribution corresponding to a monochromatic component forming the optical signal incident on the spatial light modulator may be set such that a ridge formed by joining maximum points of the intensity distribution with a line disperses with respect to the wavelength axis.

Advantageous Effects of Invention

The present invention can provide a wavelength selective switch with a very flat transmission spectrum without reducing a bandwidth.

Brief Description of Drawings

[Fig. 1] Fig. 1 is a diagram illustrating an optical path in a switching direction in a conventional common optical switch;
[Fig. 2] Fig. 2 is a diagram illustrating an optical path in a switching direction in an optical switch of a first embodiment;
[Fig. 3] Fig. 3 is a diagram illustrating a phase distribution on an LCOS as a spatial light modulating section in Fig. 2;
[Fig. 4] Fig. 4 is a diagram illustrating an example that utilizes input and output ports formed on an optical waveguide substrate; [Fig. 5] Fig. 5 is a diagram illustrating an optical path in a switching direction in an optical switch of a second embodiment;
[Fig. 6] Fig. 6 is a diagram showing a configuration example of an optical waveguide including input ports and an output port in the optical switch of the second embodiment;
[Fig. 7] Fig. 7 is a diagram illustrating an optical path in a switching direction in an optical switch of a third embodiment;
[Fig. 8A] Fig. 8A is a diagram showing a configuration example of an optical wavelength selective switch of a fourth embodiment; [Fig. 8B] Fig. 8B is a diagram showing a configuration example of the optical wavelength selective switch of the fourth embodiment;
[Fig. 9] Fig. 9 is a diagram showing a configuration example of an optical switch of a fifth embodiment;
[Fig. 10A] Fig. 10A is a diagram showing an example of an optical system for a conventional optical switch;
[Fig. 10B] Fig. 10B is a diagram showing an example of the optical system in the optical switch of the sixth embodiment;
[Fig. 11A] Fig. 11A is a diagram illustrating an example of phase setting in the optical system in the conventional optical switch; [Fig. 11B] Fig. 11B is a diagram illustrating an example of phase setting in the optical system in the optical switch of the sixth embodiment;
[Fig. 12A] Fig. 12A is a plot showing the intensities of optical signals coupled to output ports when a phase distribution is set for the optical system in the conventional optical switch;
[Fig. 12B] Fig. 12B is a plot showing the intensities of optical signals coupled to the output ports when a phase distribution is set for the optical system in the optical switch of the sixth embodiment; [Fig. 13] Fig. 13 is a diagram illustrating phase setting on a spatial phase modulating element in a seventh embodiment;
[Fig. 14A] Fig. 14A is a diagram illustrating a configuration example of an optical system in a ninth embodiment;
[Fig. 14B] Fig. 14B is a diagram illustrating a configuration example of the optical system in the ninth embodiment;
[Fig. 15A] Fig. 15A is a diagram showing a configuration example of a wavelength selective switch of a tenth embodiment;
[Fig. 15B] Fig. 15B is a diagram showing a configuration example of the wavelength selective switch of the tenth embodiment;
[Fig. 16] Fig. 16 is a diagram illustrating light rays entering a diffraction grating;
[Fig. 17A] Fig. 17A is a diagram showing the light intensity distribution of monochromatic light incident on LCOS;
[Fig. 17B] Fig. 17B is a diagram showing the light intensity distribution of monochromatic light incident on the LCOS;
[Fig. 17C] Fig. 17C is a diagram showing the light intensity distribution of monochromatic light incident on the LCOS;
[Fig. 18A] Fig. 18A is a diagram illustrating the transmission properties of selected wavelengths resulting from different types of incident light;
[Fig. 18B] Fig. 18B is a diagram illustrating the transmission properties of selected wavelengths resulting from different types of incident light;
[Fig. 18C] Fig. 18C is a diagram illustrating the transmission properties of selected wavelengths resulting from different types of incident light;
[Fig. 19] Fig. 19 is a diagram illustrating the positional relation between a pixel structure of LCOS and incident beams;
[Fig. 20] Fig. 20 is a diagram illustrating the positional relation between the pixel structure of the LCOS and incident beams;
[Fig. 21] Fig. 21 is a diagram illustrating a control pattern for LCOS; and
[Fig. 22] Fig. 22 is a diagram showing an example of a conventional wavelength selective switch.

Description of Embodiments

A first to a fifth embodiments of the present invention will be described below with reference to the drawings.

<First Embodiment>

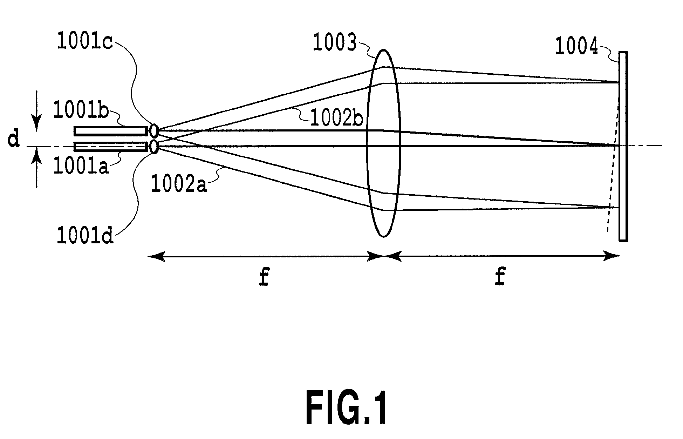

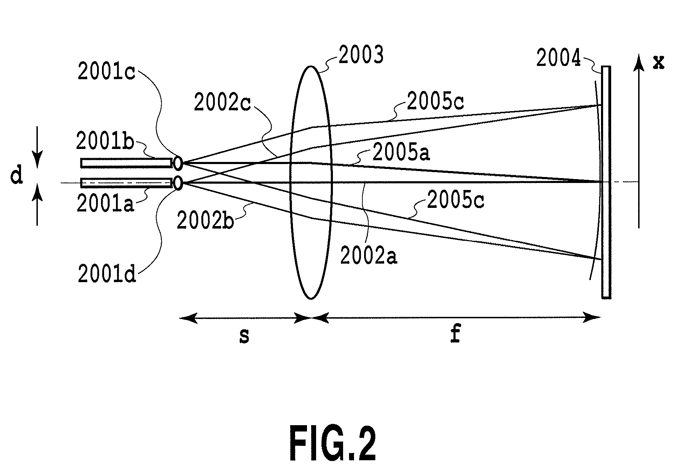

Configuration examples of an optical switch of the present embodiment enable miniaturization in contrast to configuration examples of a conventional common optical switch. A configuration example of the optical switch of the present embodiment will be described with reference to FIG. 1 and FIG. 2 so as to clarify differences from the conventional common switches. Fig. 1 is a diagram illustrating an optical path in a switching direction in a conventional common optical switch. Fig. 2 is a diagram illustrating an optical path in a switching direction in an optical switch of a first embodiment.

First, a configuration of an optical switch with a conventional common 2f optical system will be described with reference to FIG. 1. In the 2f optical system indicated in Fig. 1, the focal distance of a lens 1003 is set to f, and the distance from the lens 1003 to an input port 1001a and to an output port 1001b (hereinafter also referred to as the "input and output ports 1001a, 1001b").

The input and output ports 1001a, 1001b are arranged at a front focal position of the lens 1003 (object surface side). Microlenses 1001c, 1001d are provided at and in association with the input and output ports 1001a, 1001b, respectively. The microlenses 1001c, 1001d enable controlling the numerical aperture of an emitted beam.

In this optical system, an optical signal output through the input port 1001a is propagated as divergent light as indicated by reference numerals 1002a, 1002b until the optical signal reaches the lens 1003. The optical signal passing through the lens 1003 enters a spatial light modulating section 1004 as parallel light. The spatial light modulating section 1004 performs optical deflection needed for port selection and reflects the optical path. As the spatial light modulating section 1004, for example, LCOS (Liquid Crystal on Silicon) is used in which a liquid crystal is provided on CMOS (Complimentary Metal Oxide Semiconductor). The LCOS is an optical phase modulator with a large number of micropixels and allows phase shift dependent on any wavelength to be applied to incident light.

A deflection angle needed for the spatial light modulating section 1004 to couple an optical signal to the output port 1001b is expressed by Equation (1).

$$\theta = \arctan\ (d/f) \quad (1)$$

In Equation (1), (d) denotes the distance between the input port 1001a and the output port 1001b, and (f) denotes the focal distance of the lens 1003.

A principal ray of the optical signal output through the input port shown in Fig. 1 is parallel to a principal ray of the optical signal reflected by the spatial light modulating section 1004 toward the output port 1002b. Thus, the input and output ports 1001a, 1001b are arranged parallel to each other as shown in Fig. 1. Therefore, in this optical system, the layout and implementation of the input and output ports are simplified.

In the 2f optical system shown in Fig. 1, the overall length of the optical system is set to, for example, 2f. In this example, the distance from the lens 1003 to each of the input and output ports 1001a, 1001b is the same as the focal distance f of the lens 1003, and thus, the distance between each of the input and output ports 1001a, 1001b and the spatial light modulating section 1004 is 2f. Consequently, miniaturization of the optical switch is limited.

On the other hand, in an example of an optical switch in an optical system shown in Fig. 2, the overall length of the optical system is set to, for example, (s + f), unlike in the optical system shown in Fig. 1. The focal distance f of a lens 2003 is similar to the focal distance f of the lens 2003 shown in Fig. 1. However, the distance from the lens 2003 to an input port 2001a and to an output port 2001b (hereinafter also referred to as the "input and output ports 2001a, 2001b") is different from the distance in the optical switch in Fig. 1. That is, the distance between each of the input and output ports 2001a, 2001b and the lens 2003 is set to, for example, s (< f). Consequently, the overall length of the optical system is shorter than 2f shown in Fig. 1. Therefore, this optical switch enables miniaturization.

The optical system shown in Fig. 2 will be described. As shown in Fig. 2, in this optical system, the input and output ports 2001a, 2001b are arranged in proximity to the lens 2003. Even in this case, an optical signal from the input port 2001a is emitted toward the lens 2003 as divergent light as indicated by reference numerals 2002b, 2002c. The optical signal passing through the lens 2003 enters a spatial light modulating section 2004 as a divergent beam. In the description below, the spatial light modulating section 2004 is described as, for example, LCOS (Liquid Crystal on Silicon) (first to fifth embodiments), but for example, a grating light valve-based MEMS (Micro Electro Mechanical System) may also be applied. Furthermore, in the description of this embodiment, a reflective LCOS is taken as an example, but a transmission type spatial light modulating element such as transmissive LCOS may be used.

This embodiment notes that the distribution of a phase space on the LCOS can be flexibly set, and the spatial light modulating section 2004 has such a phase distribution as described below. Specifically, a phase with a two-dimensional spatial distribution is applied to form an equivalent concave mirror such that a wavefront with a radius of curvature that allows the wavefront to enter the LCOS is reflected at a similar radius of curvature. This is a feature of the optical switch of the present embodiment.

The radius of curvature of the spatial distribution of the phase applied to the LCOS serving as the spatial light modulating section 2004 is preferably equal to the radius of curvature of the wavefront of the optical signal entering the spatial light modulating section 2004.

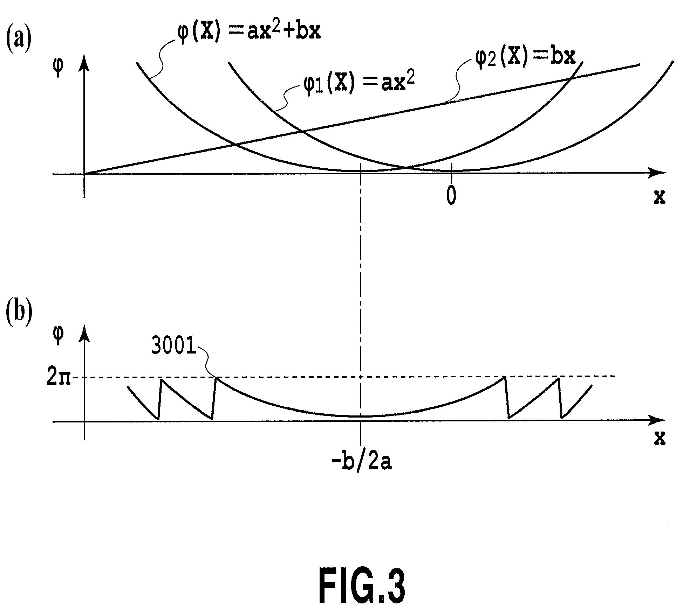

Moreover, as is the case with the optical system shown in Fig. 1, beam deflection needed for port selection needs to be applied to the spatial light modulating section 2004. Thus, a phase distribution φ (x) applied to the spatial light modulating section 2004 is expressed by Equation (2) through superimposition of $\phi_1(X)$ and $\phi_2(x)$ shown in Fig. 3.

$$\phi(x) = ax^2 + bx \quad (2)$$

In Equation (2), (a) denotes a secondary component corresponding to the radius of curvature of the wavefront of the optical signal, and (b) denotes a primary component needed for port selection.

Fig. 3 is a diagram illustrating the phase distribution of the spatial light modulating section 2004, where (a) shows the phase distribution and (b) shows the manner of phase shift.

$\phi_1$ shown in Fig. 3(a) denotes a component of curvature compensation for the wavefront of the optical signal, and $\phi_2$ denotes a component needed for beam deflection. In this example, $\phi_1 = ax^2$ and $\phi_2(x) = bx$ are set.

$\phi(x)$ expressed in Equation (2) is obtained by shifting $\phi_1(x) = ax^2$ by, for example, -b/2a in an x axis direction.

In the spatial light modulating section 2004, the phase distribution φ(x) expressed in Equation (2) is set to cause a principal ray 2002a of the optical signal toward the output port 2001b to follow an optical path indicated by reference numeral 2005a. This depends on the second term (bx) on the right side of Equation (2).

In Fig. 2, with the beam shape of the optical signal converged as indicated by reference numerals 2005b and 2005c shown in Fig. 2, the optical signal is propagated to the output port 2001b. Then, the optical signal is finally focused on the output port 2001b.

Here, for the coefficient a of the first term on the right side of Equation (2) described above, the optimum value varies according to the distance from each of the input and output ports 2001a, 2001b to the lens 2003. Furthermore, in the optical system shown in Fig. 2, the optical signal from the input port 2001a is formed as a Gaussian beam. Consequently, based on a situation when the Gaussian beam enters the lens 2003, the radius of curvature of the beam wavefront entering the spatial light modulating section 2004 can be determined.

In general, when the focal distance of the lens 2003 is denoted as f, the distance from the lens 2003 to an object is denoted as d1, and the distance from the lens 2003 to an image is denoted as d2, an ABCD matrix for this beam is expressed by Equation (3).

[Math. 1]

$$\begin{bmatrix} A & B \\ C & D \end{bmatrix} = \begin{bmatrix} 1 & d_2 \\ 0 & 1 \end{bmatrix}\begin{bmatrix} 1 & 0 \\ -1/f & 1 \end{bmatrix}\begin{bmatrix} 1 & d_1 \\ 0 & 1 \end{bmatrix}$$
$$= \begin{bmatrix} 1-d_2/f & d_1+d_2-(d_1+d_2)/f \\ -1/f & 1-d_1/f \end{bmatrix} \quad (3)$$

Here, as is known, when, on the assumption that a beam waist before passage through the lens is at a position corresponding to the distance d1 from the lens 2003, the beam waist is present again at a position corresponding to the distance d2 from the lens 2003, there is generally such a relation as represented by Equation (4) between the waist positions before and after the passage of the Gaussian beam through the lens (see, for example, Basic and Applied Studies of Optical Coupling system for Optical Device, Kenji Kono, Gendai Kogakusha, pp. 23 to 28)

[Math. 2]

$$AC + \left(\frac{\lambda}{\pi\omega_0^2}\right)^2 BD = 0 \quad (4)$$

Based on this relation, the position of the beam waist after passage through the lens is expressed by Equation (5).
[Math. 3]

$$d_2 = \left( \frac{1}{f} - \gamma d_1 + \frac{\gamma d_1^2}{f} \right) \bigg/ \left( \frac{1}{f^2} + \gamma - \frac{2\gamma d_1}{f} + \frac{\gamma d_1^2}{f^2} \right) \qquad (5)$$

In Equation (5), $\gamma$ is expressed by Equation (6).
[Math. 4]

$$\gamma = \left( \frac{\lambda}{\pi \omega_0^2} \right)^2 \qquad (6)$$

In Equation (6), $\lambda$ denotes the wavelength of the optical signal and $\omega_0$ denotes the size of the beam waist at the input port.
Based on the above point, the radius of curvature of the wavefront of the optical signal incident on the spatial light modulating section 2004 is determined as follows. That is, in Equation (5), when d2 is determined with d1 = s set, the result is indicative of the virtual beam waist of the optical signal passing through the lens.
In the example of the optical system shown in Fig. 2, the above-described d2 has a negative value, and the virtual beam waist is present on the left side of the sheet with respect to the lens 2003, that is, on the object side. Therefore, the radius of curvature R of the wavefront of the optical signal entering the spatial light modulating section 2004 is expressed by Equation (7).

$$R = f - d2 \qquad (7)$$

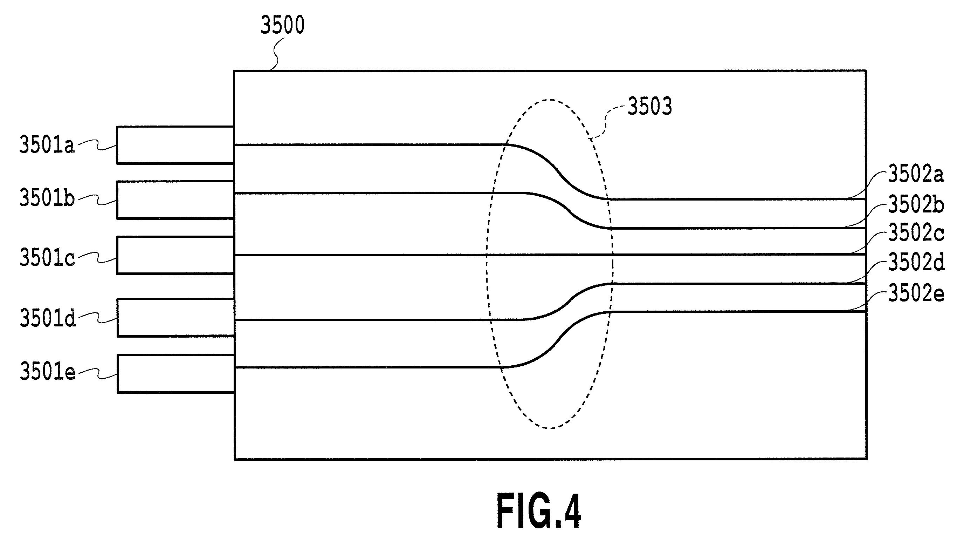

In Equation (7), d2 exhibits a negative value.
A spatial phase modulator such as LCOS has an upper limit on a phase. If the amount of needed phase shift exceeds the upper limit value, the amount of phase shift is looped back at e.g. $2\pi$ so as to be smaller than the upper limit value as shown in Fig. 3(b). Fig. 3 (b) shows a case where the amount of phase shift is looped back at $2\pi$. However, the amount need not necessarily be $2\pi$ but the step ($\phi$) of the loopback of the phase indicated by reference numeral 3001 may be an integral multiple of $2\pi$.
The loopback of the phase as shown in Fig. 3(b) causes an increase in loss resulting from diffraction of light. For the loopback at a phase of $2\pi$ indicated by reference numeral 3001 in Fig. 3(b), near the loopback, an area with a finite width is present which involves, instead of discrete loopback at a phase of $2\pi$, an analog change in phase according to the degrees of interference of an electric field and follow-up of the liquid crystal element at phases of 0 and $2\pi$. This area may cause loss, and thus, such loopbacks are preferably reduced.
The number of loopbacks at a phase of $2\pi$ increases with decreasing radius of curvature R expressed in Equation (7). In other words, it is not preferable that the wavefront of the Gaussian beam has the minimum radius of curvature. A condition for the minimum radius of curvature may be that the spatial light modulator 2004 is located at the position of Rayleigh length of the Gaussian beam. Thus, it is necessary to avoid locating the LCOS as the spatial light modulator 2004 at the position of the Rayleigh length.
In this embodiment, the case where one output port is provided has been described by way of example. However, two or more (plurality of) output ports may be provided. Port selection for provision of a plurality of output ports is implemented by changing b in Equation (2) as needed.
Moreover, the port selection can be implemented using an optical waveguide with input and output ports fabricated on a substrate. Fig. 4 is a diagram illustrating an example utilizing input and output ports formed on an optical waveguide substrate 3500. Optical fibers 3501a to 3501e are connected to the optical waveguide substrate 3500, and optical signals through each of the optical fibers 3501a to 3501e are coupled to input and output ports 3502a to 3502e formed on the optical waveguide substrate 3500. A bend waveguide 3503 connected to the input and output ports 3502a to 3502e serves to reduce the distances (pitches) between the input and output ports 3502a to 3502e to allow their optical outputs to be existed through the input port input and output ports 3502a to 3502e.
In general, the optical fiber has an outer diameter of 125 $\mu$m, and the distance between the input and output waveguides is affected by the magnitude of the outer diameter of the optical fiber, leading to a limit on the distance between the input and output waveguides. On the other hand, the optical waveguide shown in Fig. 4 is advantageous in that the bend waveguide 3503 allows the pitch on the side of the output port to be optionally set.

As described above, in the optical switch of the present embodiment, the phase distribution of the spatial light modulator 2004 is set so as to superimpose the phase distribution of the same radius of curvature as that of the wavefront of incident light on the phase distribution of the principal ray of the reflected light. Therefore, light through the input port 2001a is reflected by the spatial light modulator 2004, and the reflected light is focused by the output port 2001b, making the overall length of the optical system shorter than the conventional overall length of 2f. Therefore, miniaturization of the optical switch can be achieved.

<Second Embodiment>

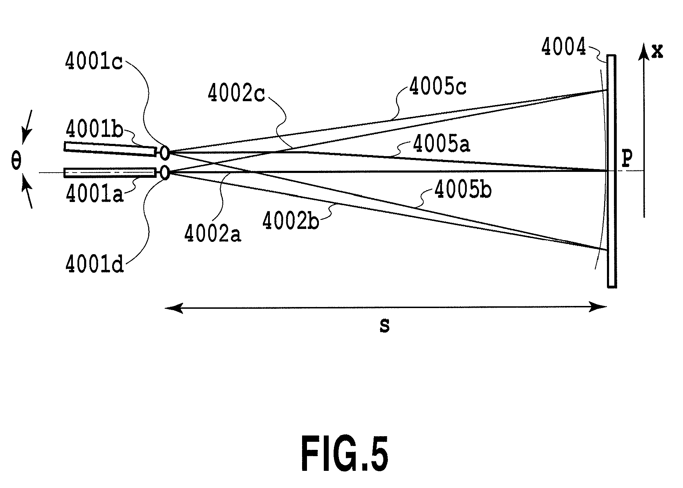

Now, an optical switch according to a second embodiment will be described.
For the optical switch shown in Fig. 2, the case with the lens 2003 has been described. The lens 2003 allows the following effects to be exerted. That is, (1) the lens 2003 is placed at a distance of f from the spatial light modulator 2004. Thus, the input and output ports 2001a, 2001b can be arranged parallel to each other to simplify the layout of the optical system. (2) The spread of a beam is suppressed to some degree to limit the area of the beam entering the spatial light modulator 2004. Alternatively, the lens 2003 may be omitted. Fig. 5 shows an optical switch with the lens 2003 omitted.
Fig. 5 is a diagram illustrating an optical path in a switching direction in the optical switch of the second embodiment.
In the optical switch shown in Fig. 5, an input port 4001a and an output port 4001b (hereinafter also referred to as the "input and output ports 4001a, 4001b") are arranged at any positions, and the above-described lens 2003 is not provided. In this embodiment, a distance of s is present between each of the input and output ports 4001a, 4001b and a spatial light modulator 4004. In this case, the configuration in which the input and output ports 4001a, 4001b are optical waveguides formed on the substrate is suitable for implementing the optical switch of the present embodiment because positioning can be achieved at an accuracy based on photolithography and because an output direction of light can also be optionally set.
In Fig. 5, an optical signal output through the input port 4001a propagates to the spatial light modulator 4004 while diverging. In this case, a principal ray of the optical signal is as indicated by reference numeral 4002a and a beam of the optical signal has such a spread as indicated by reference numerals 4002b and 4002c.
On the spatial light modulator 4004, a deflection function needed for port selection and a phase on which the function of a concave mirror needed for beam shaping is superimposed are set as is the case with the first embodiment 1. In this case, a principal ray of the optical signal reflected by the spatial light modulator 4004 is as indicated by reference numeral 4005a. The principal ray propagates to the output port1 4001b, with the shape of the beam converging as indicated by reference numerals 4005b, 4005c. In this case, the output port 4001b is arranged to place the waveguide and the principal ray 4005a in the same straight line, so as to maximize the efficiency of coupling to the output port 4001b.
Here, when the distance from each of the input and output ports 4001a, 4001b to the spatial light modulator 4004 is denoted by s and the distance between the input and output ports 4001a, 4001b is denoted by d, an angle through which light is deflected by the spatial light modulator 4004 is expressed by Equation (8).

$$\theta \cong d/s \quad (8)$$

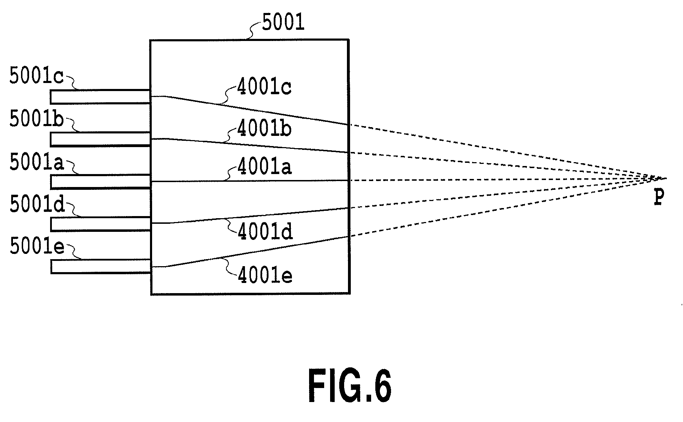

In Equation (8), s denotes not only the distance from each of the input and output ports 4001a, 4001b to the spatial light modulator 4004 but also the radius of curvature of the wavefront of the optical signal on the spatial light modulator.
When the principal ray of the optical signal output through the input port 4001a is arranged in alignment with an optical axis, the waveguide forming the output port 4001b is preferably arranged like a straight line corresponding to subtraction of the angle θ expressed by Equation (8) from an intersection point between the spatial light modulator 4004 and the optical axis.
Now, a configuration example of the waveguide according to this embodiment will be described with reference to Fig. 6. Fig. 6 is a diagram showing a configuration example of an optical waveguide 5001 including an input waveguide 4001a and output waveguides 4001a, 4001b and 4001c.
In addition to the input waveguide 4001a serving as an input port and the output waveguide 4001b as an output port, three output waveguides (output ports) 4001c, 4001d and 4001e are arranged in the optical waveguide 5001 as shown in Fig. 6. Fig. 6 shows a total of, for example, four output waveguides, but five or more output waveguides may be arranged.
In Fig. 6, a point P is the same as the point P shown in Fig. 5, that is, the intersection point P between the spatial light modulator 4004 and the optical axis. The input and output waveguides 4001a to 4001e are radially arranged around the point P. Furthermore, input and output fibers 5001a to 5001e are provided in association with the input and output waveguides 4001a to 4001e. In Fig. 6, the effect of Snell's law involved in emission to the space through the optical waveguide is neglected. However, the configuration stays essentially the same.

<Third Embodiment>

Now, an optical switch of a third embodiment will be described.

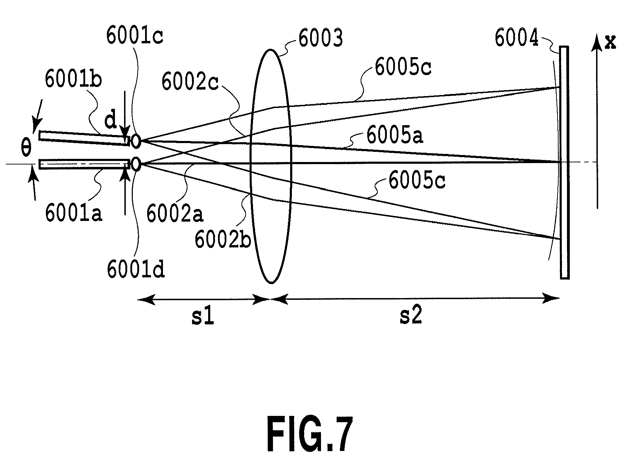

For the optical switch shown in Fig. 5, the case with no lens has been described. However, a lens may be provided and arranged at any position. Fig. 7 shows a configuration example of such an optical switch.

Fig. 7 is a diagram illustrating an optical path in a switching direction in the optical switch of the third embodiment.

In the optical switch shown in Fig. 7, a lens 6003 may be arranged at a distance s1 from an input port 6001a and from an output port 6001b and at a distance s2 from a spatial light modulator 6004.

In this case, a principal ray of an optical signal output through the input port 6001a is as indicated by reference numeral 6002a, and the beam propagates to the lens 6003 while having such a spread as indicated by reference numerals 6002b, 6002c.

The optical signal passing through the lens 6003 then has its beam width reduced and propagates to the spatial light modulating section 6004. Thus, the radius of curvature of a wavefront that needs to be compensated for by the spatial light modulating section 6004 is smaller than the radius of curvature in the second embodiment. That is, in Equation (5), the radius of curvature of the beam of the optical signal entering the spatial light modulating section 6004 when d1 = s1 is expressed by Equation (9).

$$R = s2 - d2 \quad (9)$$

In Equation (9), d2 denotes a negative value.

For example, given the focal distance f of the lens = 100 mm, s = 100 mm, s1 = 50 mm, and s2 = 50 mm, the overall length of the optical system in this embodiment is s1 + s2 = 100 mm, and the overall length of the optical system of the second embodiment is also 100 mm. Consequently, the overall lengths in this embodiment and the second embodiment are both 100 mm and are equal. On the other hand, the radius of curvature R of the wavefront to be compensated for by the spatial light modulating section is R= s = 100 mm in this embodiment but is R = 149.9 mm in the third embodiment based on Equation (5) and Equation (9). Therefore, in this embodiment, the radius of curvature R of the wavefront is smaller than the radius of curvature R in the second embodiment, and the wavefront has a gentle curve.

<Fourth Embodiment>

The optical switch has been described above, but the present invention may be applied to a wavelength selective switch. In the description of this embodiment, the optical system of the first embodiment is applied to a wavelength selective switch by way of example. However, substantially similar effects are produced when optical systems in the second embodiment and the third embodiment are applied.

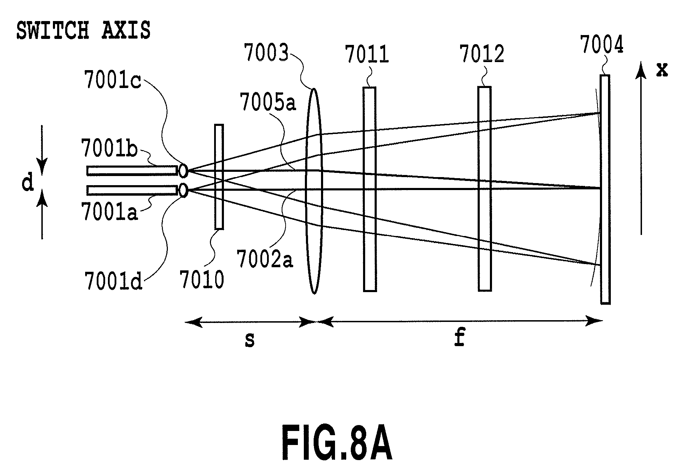

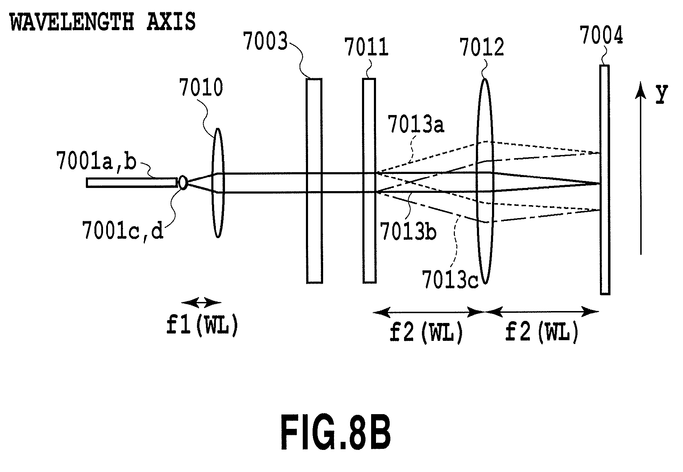

Fig. 8A and Fig. 8B are diagrams showing a configuration example of a wavelength selective switch of a fourth embodiment. Fig. 8A shows a configuration in a switch axis direction. Fig. 8B shows a configuration in a wavelength axis direction. In Fig. 8A, x denotes the x axis shown in Fig. 3. In Fig. 8B, y denotes an axis orthogonal to the x axis.

The wavelength selective switch shown in Fig. 8 includes an input port 7001a, an output port 7001b, microlenses 7001c, 7001d, a lens 7003, a collimate lens 7010, a dispersive element 7011, a focusing lens 7012, and a spatial light modulator 7004.

The input and output ports 7001a, 7001b correspond to the input and output ports 2001a, 2001b of the first embodiment. The microlenses 7001c, 7001d correspond to the microlenses 2001c, 2001d of the first embodiment.

On the other hand, unlike the lens 2003 of the first embodiment, the lens 7003 in this embodiment is a cylindrical lens having optical power only in the switch axis direction.

The collimate lens 7010 is, for example, cylindrical, and is provided at a position corresponding to f1 (WL) from a beam waist of the microlens 7001d as shown in Fig. 8. The collimate lens 7010 converges incident light into parallel light in the wavelength axis direction shown in Fig. 8B.

The dispersive element 7011 may be a transmissive diffractive grating, a reflective diffractive grating or prism, or the like. This embodiment will be described taking a transmissive diffractive grating as an example.

The focusing lens 7012 is positioned such that a distance of f2 (WL) is present between the dispersive element 7011 and the focusing lens 7012 and between the focusing lens 7012 and the spatial light modulator 7004. In this embodiment, the focal distance of the focusing lens 7012 is denoted by, for example, f2 (WL). WL stands for wave length.

Like the spatial light modulating section 2004 in the first embodiment, the spatial light modulating section 7004 is, for example, LCOS with a large number of micropixels, and allows the phase of the incident light to be shifted according to a position where the incident light enters the LCOS. As described below, the position where an optical signal enters the LCOS 7004 varies according to wavelength, and thus, the spatial light modulating section 7004 enables phase shift according to wavelength to allow optical coupling to the output port varying according to wavelength.

An optical signal from the input port 7001a passes through the microlens 7001d and is output to a free space. In this case, in the switch axis direction shown in Fig. 8A, the optical signal propagates to the lens 7003 while diffusing as is the case with the first embodiment. On the other hand, in the wavelength axis direction shown in Fig. 8B, the optical signal is converted into parallel light by the collimate lens 7010, and the parallel light propagates to the lens 7003.

In this embodiment, the lens 7003 is a cylindrical lens having optical power only in the switch axis direction, and the optical signal passing through the lens 7003 enters the dispersive element 7011.

In Fig. 8B, the optical signal output from the dispersive element 7011 is diffracted in a direction varying according to the wavelength of the optical signal. How the diffraction occurs is illustrated by a dashed line 7013a, a solid line 7013b, and an alternate long and short dash line 7013c.

The optical signal passing through the dispersive element 7011 is focused in the wavelength axis direction shown in Fig. 8B, by the focusing lens 7012 in the wavelength axis direction. The focused optical signal is then input to the spatial light modulator 7004. The focusing lens 7012 in this embodiment is a cylindrical lens having optical power only in the wavelength axis direction.

Then, the optical signal on which spatial phase modulation has been performed by the spatial light modulating section 7004 is reflected by the spatial light modulating section 7004 and coupled to the output port 7001b as is the case with the first embodiment. In this case, as shown in Fig. 8A and Fig. 8B, the optical signal entering the spatial light modulating section 7004 is reflected at a position varying according to the wavelength of the optical signal. This enables coupling to the output port varying according to wavelength.

This embodiment illustrates a case the dispersive element 7011 is provided between the lens 7003 and the focusing lens 7012. This is because the beam spread in the switch axis direction shown in Fig. 8A is relatively small, facilitating utilization of the performance of the dispersive element 7011. However, dispersive element 7011 may be provided, for example, between the lens 7003 and the collimate lens 7010.

<Fifth Embodiment>

Fig. 4 and Fig. 6 have been described in conjunction with the case where the optical waveguides are utilized as the input and output ports and where advantageous effects are produced by reducing the distance between the input and output ports. Alternatively, an optical waveguide may be utilized by integrating various circuits into the optical waveguide.

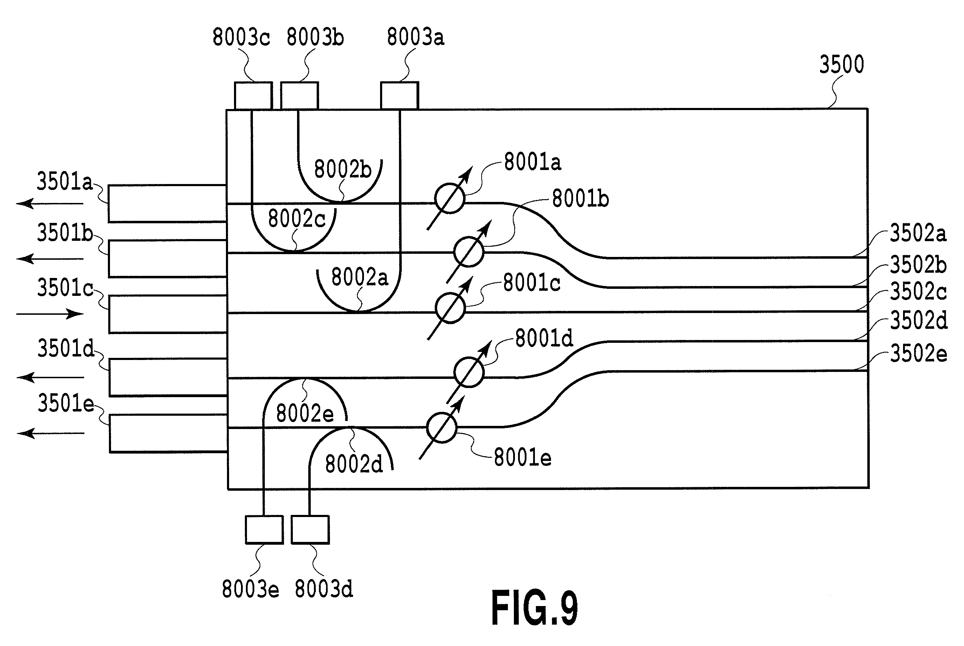

Fig. 9 is a diagram showing a configuration example of an optical switch of a fifth embodiment. This optical switch corresponds to a case where functions are added to the input optical system of the first embodiment.

In Fig. 9, variable optical attenuators 8001a to 8001e are provided in respective input and output waveguides 3502a to 3502e.

The applied variable optical attenuators 8001a to 8001e each use a Mach-Zehnder interferometer that exhibits variability based on thermo-optic effects.

The variable optical attenuators 8001a to 8001e allow propagation of an optical signal to be turned off when the optical switch itself becomes defective if a passive state that prevents light from traveling, that is, a normally off state, is set. This allows problems such as optical surge to be solved.

In Fig. 9, optical taps 8002a to 8002e connected to the input and output waveguides 3502a to 3502e branch parts of optical signals from the input and output waveguides 3502a to 3502e such that the branched optical signals are consequently output to light receiving elements 8003a to 8003e. In this embodiment, an input signal is provided to an optical fiber 3501a, and output signals are provided to optical fibers 3501a, 3501b, 3501d, 3501e. Thus, the light receiving element 8003c allows the power of the input signal to be monitored, and the light receiving elements 8003a, 8003b, 8003d, 8003e allow the intensity of output light to be monitored.

As the optical taps 8002a to 8002e, various optical waveguides may be applied such as directional couplers or wavelength independent couplers based on multimode interferometers or Mach-Zehnder interferometers.

When the optical taps 8002a to 8002e and the light receiving elements 8003a to 8003e are used to apply the optical switch as a variable optical attenuator, the amount of attenuation can be monitored.

Moreover, when the optical switch of this embodiment is combined with the wavelength selective switch of the fourth embodiment, such a configuration allows implementation of the function of an optical channel monitor (OCM) or an optical performance monitor (OPM) by selectively monitoring the intensity for each wavelength. Furthermore, the switches can be configured to have various functions other than the above-described functions of the attenuation amount monitor, the OCM, and the OPM by changing the direction of a monitor circuit as needed.

Optical switches, optical taps, optical VOAs, optical monitors, or composite components thereof may be integrated together by arranging Mach-Zehnder interferometers or directional couplers at the input port and the output port.

<Sixth Embodiment>

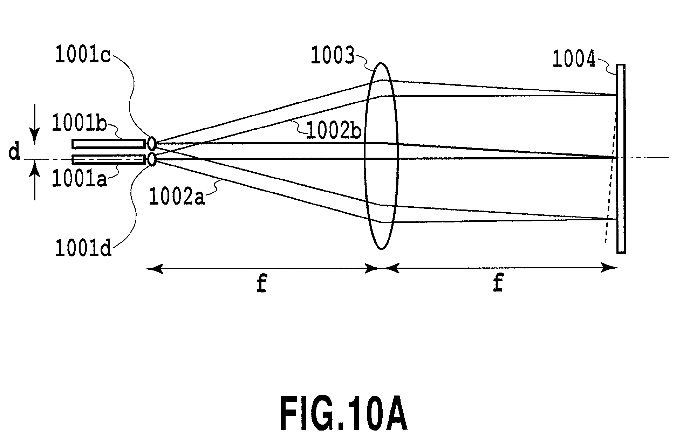

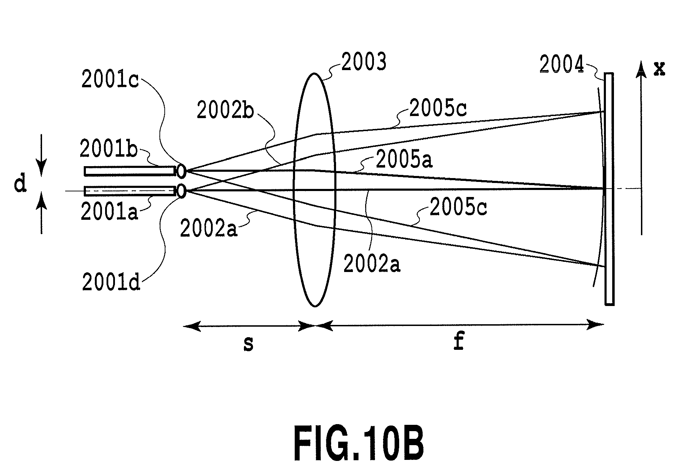

Fig. 10A and Fig. 10B are diagrams showing an example of an optical system for a conventional optical switch and an example of an optical system for an optical switch of a sixth embodiment. Fig. 10A shows a general configuration of the optical system for the optical switch of the sixth embodiment. Fig. 10A is the same as Fig. 1, and Fig. 10B is the same as Fig. 2. Thus, the description of Fig. 10A and Fig. 10B is omitted.

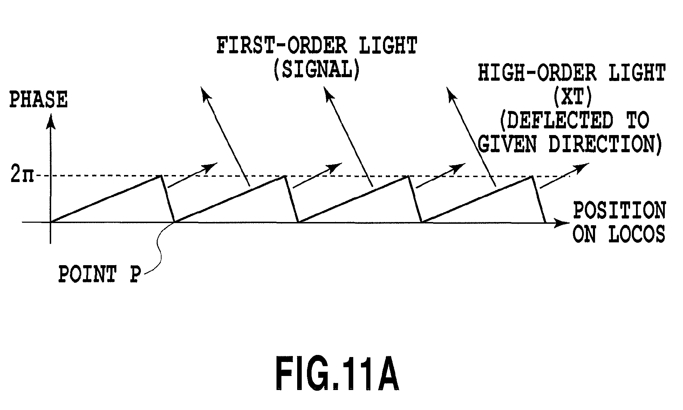

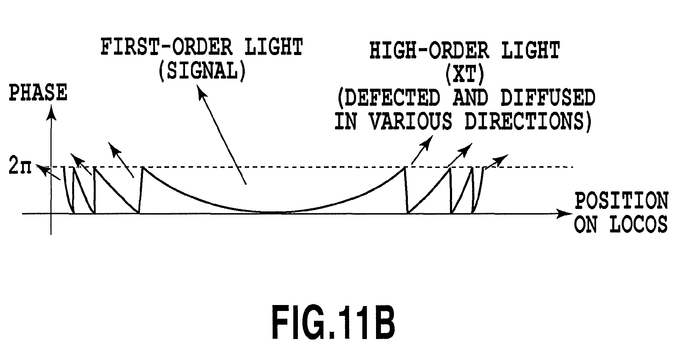

In the optical systems in Fig. 10A and Fig. 10B, phase distributions shown in Fig. 11A and Fig. 11B, respectively, are set in LCOS elements. In this embodiment, a wavefront entering the LCOS element has a finite radius of curvature. In other words, the wavefront is not a plane wave.

Fig. 11A and Fig. 11B are diagrams illustrating phase setting for the optical system for the conventional optical switch and phase setting for the optical system for the optical switch of the sixth embodiment, respectively. Fig. 11A shows the phase setting for the optical system for the conventional optical switch and the phase setting for the optical system for the optical switch of the sixth embodiment, respectively.

In general, for spatial light modulating elements such as LCOS, a phase modulation index is limited to approximately $2\pi$. In this case, to provide a linear phase distribution in order to implement optical switching, a technique is commonly used in which the period is periodically looped back at $2\pi$ to equivalently provide a linear phase distribution as shown in Fig. 11A. For example, in the example in Fig. 11A, a discontinuous phase change is needed in an area indicated at point P where the phase changes from $2\pi$ to 0. However, in the spatial light modulating elements such as LCOS elements, realizing a discontinuous phase change at point P is impossible. This is due to the interference of an electric field between adjacent pixels on the LCOS element and the continuity of the liquid crystal element. That is, near point P, an area is present where the phase setting changes rapidly from $2\pi$ to 0. The optical signal in this area undergoes a slope phase change from $2\pi$ to 0. Thus, as shown in Fig. 11A, this area also appears with the same periodicity as that of a linear slope that implements a switching operation. Therefore, an optical signal associated with this area generates high-order diffracted light, leading to crosstalk.

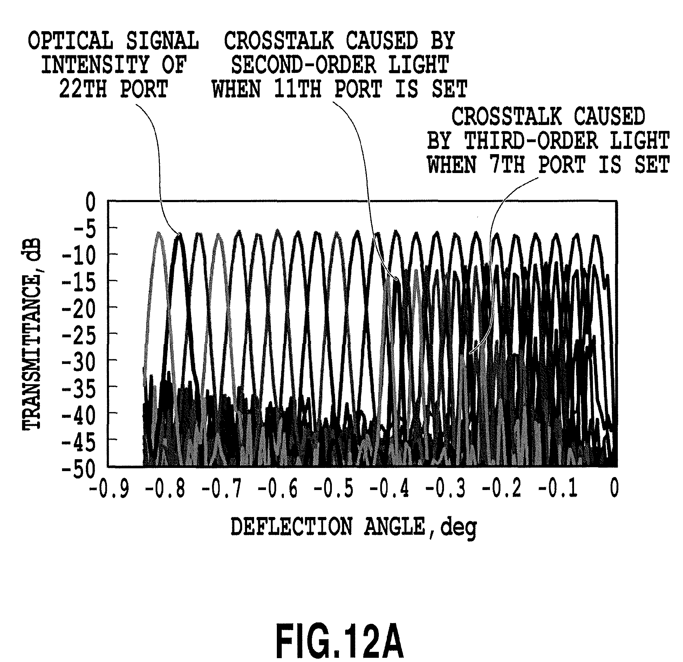

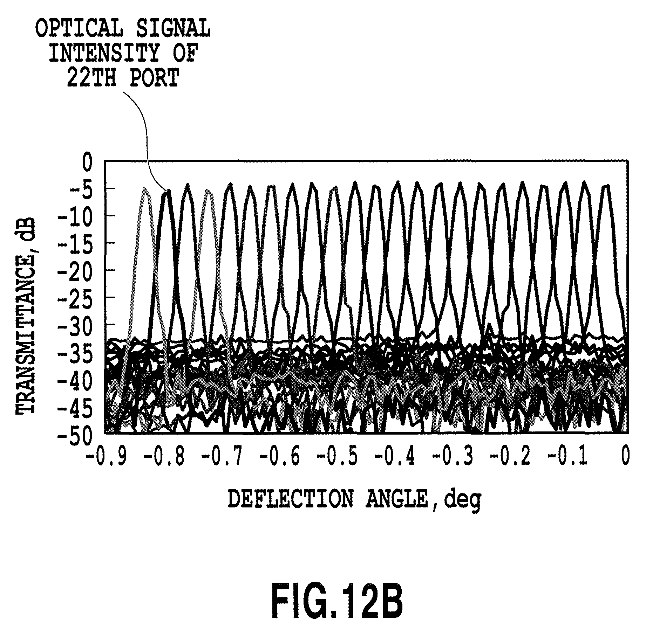

Fig. 12A is a plot diagram illustrating the intensities of optical signals coupled to the output ports when a phase distribution is set in the optical system for the conventional optical switch. Fig. 12B is a plot diagram illustrating the intensities of optical signals coupled to the output ports when a phase distribution is set in the optical system for the optical switch of the sixth embodiment.

In Fig. 12A, the axis of abscissas represents a deflection angle through which a beam is deflected by the LCOS element, and the axis of ordinate represents the light intensity. Furthermore, in Fig. 12A, the number of output ports is 23, and the light intensities are plotted by different lines. A thick line in Fig. 12A illustrates the dependence, on the deflection angle, of the optical signal at the 22nd port (the second output port from the outermost angle).

Fig. 12A shows crosstalk occurring at the 22nd port (deflection angle: -0.8°) (thick line) when light is set to be output to the 11h port (deflection angle: -0.4°). As the deflection angle by the LCOS is increased, most of the optical signal is coupled to the 22nd port at a deflection angle of approximately 0.8°. However, it is found that, even when the optical signal is routed to the 11th port with the deflection angle set to approximately 0.4°, approximately -15 dB of light is coupled to the 22nd port. This is because, when light is coupled to the 11th port, relevant second-order diffracted light is coupled to the 22nd port.

Further, it is found that, when light is routed to the 7th port (deflection angle: -0.26°), this third-order diffracted light is coupled to the 22nd port at an intensity of approximately -30 dB. An area to which such high-order diffracted light is not coupled ranges from the 12th port to the 23rd port. That is, to avoid deterioration of crosstalk caused by high-order diffracted light, it is preferable to avoid arranging output ports in an area in which the deflection angle ranges 0° to an inner angle of approximately 0.4°.

On the other hand, Fig. 11B shows an example of a phase distribution set in the optical system of the present embodiment. In the optical system of the present embodiment in Fig. 10B, an optical signal entering the LCOS as a light deflecting element is incident as a spherical wave with a phase distribution curved in the switch axis direction (a cylinder surface having a radius of curvature only on the switch axis). The LCOS element achieves switching by superimposing a phase distribution that allows the spherical surface to be corrected on a linear phase distribution that contributes to deflection.

Here, in the optical system of the present embodiment, the phase distribution applied to the LCOS element needs to be looped back at $2\pi$ as is the case with the conventional optical system. However, as is apparent from Fig. 11B, no periodicity is present at positions where loopback from $2\pi$ to 0 occurs. Therefore, reflected light resulting from the incompleteness (continuity) of the loop back diffuses to different areas.

Fig. 12B is a plot diagram illustrating the intensities of optical signals coupled to the output ports of the optical path in the optical system of the sixth embodiment. As in the case of Fig. 12A, the axis of abscissas in Fig. 12B represents the deflection angle through which a beam is deflected by the LCOS element, and the axis of ordinate in Fig. 12B represents the light intensity of each output. In Fig. 12B, the loopback at $2\pi$ is aperiodic, and thus, high-order diffracted light diverges to prevent possible crosstalk described above. Fig. 12B indicates that, for example, in the conventional optical system, when light through the 1st port is set to be output to the 11th port, high-order diffracted light is prevented which is otherwise generated at output ports at positions corresponding to a double angle and a triple angle. This is because, in the phase setting in Fig. 11B, the loopback from $2\pi$ to 0 is aperiodic, preventing high-order light from being generated at particular positions. Optical energy having contributed to high-order light is diffused and evenly distributed in the directions of various deflection angles. Therefore, it is found that the crosstalk evenly rises at -35 dB.

In order to avoid high-order light, in the conventional optical system, it is not possible to arrange ports in an area in which the deflection angle ranges from 0° to an inner angle of approximately 0.4°. However, in the optical system of the present embodiment, the ports can be arranged at inner angles. In other words, the optical system of the present embodiment allows a double number of output ports to be secured compared to the optical system for the conventional optical switch, enabling a large-scale switch to be implemented. According to this embodiment, ports that are unused due to possible crosstalk are reduced, effectively thereby allowing halving of the beam deflection angle of the LCOS needed to secure the same number of ports.

The optical system of the present embodiment further allows the deflection angle through which light is deflected by the LCOS to be halved in securing the same number of ports. That is, the height of the optical system can be halved, thereby contributing to making the optical system low-profile to enable miniaturization of optical switch modules.

<Seventh Embodiment>

In the first embodiment, the case has been described where second-order phase setting is performed on the LCOS, which is a spatial phase modulating element, for facilitation of description (Equation (2) in the first embodiment). However, strictly speaking, the LCOS preferably has a spherical surface (a cylinder surface having a radius of curvature only on the switch axis). That is, the wavefront of an optical signal entering the LCOS is, to be exact, spherical and is preferably expressed by Equation (10). The radius of curvature of the wavefront as entering the LCOS has a finite value. In other words, the wavefront is not a plane wave.
[Math. 5]

$$\phi(x) = R - \sqrt{R^2 - x^2} \qquad (10)$$

Here, R denotes the radius of curvature of the wavefront. In this case, a linear phase distribution associated with beam deflection at the time of switching is expressed by Equation (11).
[Math. 6]

$$\phi(x) = R - \sqrt{R^2 - x^2} + bx \qquad (11)$$

<Eighth Embodiment>

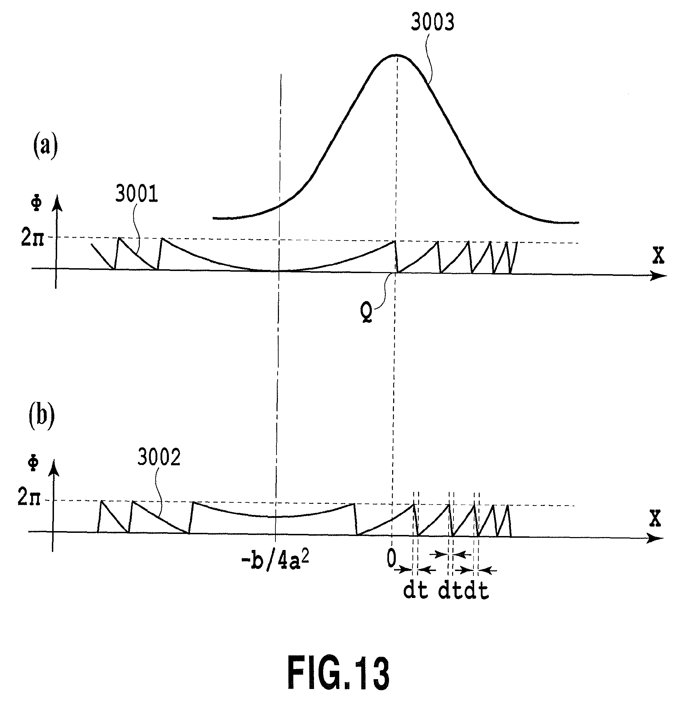

Fig. 13 is a diagram illustrating phase setting on the spatial phase modulating element of the seventh embodiment, where (a) shows a light intensity distribution resulting from superimposition of a first-order phase distribution on a second-order phase distribution and (b) shows a light intensity distribution resulting from setting of a phase offset in the light intensity distribution in (a). For facilitation of description, the following will be described using a phase distribution of a second-order curve in the first embodiment instead of a phase of a complete spherical wave in the seventh embodiment. However, the description also applies to the case of a complete spherical wave.

As described above in the first embodiment, in the optical system of the present embodiment, a phase distribution set for the LCOS results from superimposition of a second-order phase distribution allowing the wavefront to be compensated for on a first-order phase distribution for deflection. A curve resulting from superimposition of a second-order curve and a first-order curve is a second-order curve. Here, when the gradient of a second-order curve component is denoted by a and the gradient of a first-order curve component is denoted by b, a second-order curve results which has an axis corresponding to the axis of the above-described second-order curve shifted by -b/2a. The superimposed phase distribution has a distribution structure in which the phase is looped back at an upper limit value (for example, $2\pi$) that can be set by the LCOS. In this case, depending on a switched output, the loopback structure may be generated at a position where a light intensity distribution 3003 on the LCOS is maximized. This is because the center of the intensity distribution of a beam entering the LCOS is determined by the optical system and is constant regardless of the phase setting for the LCOS. It shows the above-described case. Fig. 13(a) shows a case where, when an optical signal is incident which has a distribution with the maximum intensity at a coordinate center Q of the LCOS, the position of the loopback at $2\pi$ in the above-described superimposed phase distribution coincides with the coordinate center Q. In this case, the incompleteness of the phase loopback associated with the loopback at $2\pi$ makes a great impact.

In contrast, as shown in Fig. 13(b), the loopback position can be shifted by adding an appropriate phase offset to the superimposed distribution. That is, phase setting is such that, a distribution provided with a constant c in addition to a second-order distribution with a gradient a and a first-order distribution with a gradient b is assumed and looped back at $2\pi$ as expressed by Equation (12).

[Math. 7]

$$\phi(x) = ax^2 + bx + c \quad (12)$$

In Fig. 13 (b) shows an example where the constant c is set to any value and where the loopback at $2\pi$ is shifted from the point with the highest light intensity.

The constant c is preferably set as follows. That is, the width dt of the area where the loopback at $2\pi$ occurs is expected to be the same for the entire area on the LCOS. Thus, the constant (c) may be determined so as to minimize the sum of the integral values for incident light signals in the area.

The above-described phase setting enables a reduction in stray light resulting from the loopback at $2\pi$, thus enabling a reduction in deterioration of crosstalk.

<Ninth Embodiment>

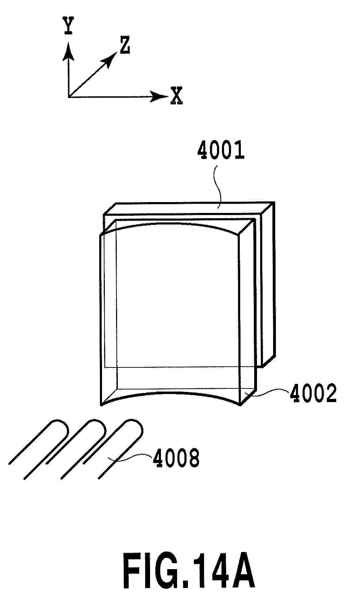

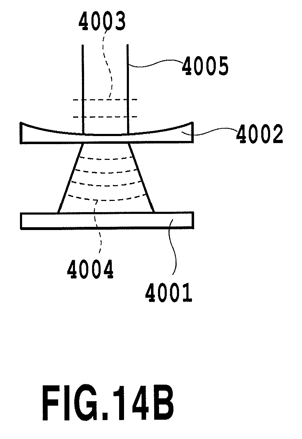

Fig. 14A and Fig. 14B are diagrams illustrating a configuration example of an optical system of a ninth embodiment, where Fig. 14A shows an arrangement example of an LCOS 4001 and a cylinder lens 4002, and Fig. 14B shows a manner in which an optical signal enters the LCOS 4001 in the optical system in Fig. 14A.

In Fig. 14A, a cylinder lens 4002 is provided in front of the LCOS 4001 as an optical deflecting element. In this embodiment, for example, a concave cylinder lens is used as the cylinder lens 4002. However, for example, a convex cylinder lens may be applied. This also allows production of effects similar to the effects of the concave cylinder lens.

In Fig. 14A, input and output ports 4008 are provided parallel to each other along an X axis direction. In this case, the wavefront of an optical signal entering the optical system via the cylinder lens 4002 is curved, thus allowing production of effects similar to the effects of the sixth embodiment. That is, even when the plane wave shown in Fig. 14B is incident, the wavefront of the optical signal entering the LCOS 4001 via the cylinder lens 4002 is spherical (a cylinder surface having a radius of curvature only on the switch axis). With this wavefront, a phase distribution to be set for the LCOS 4001 is obtained by superimposing a phase distribution that allows a spherical surface represented by the wavefront to be compensated for, on a first-order phase distribution that contributes to switching (an effect similar to the corresponding effect of the sixth embodiment). Therefore, crosstalk caused by high-order light is reduced. In other words, the number of ports can be doubled.

<Tenth Embodiment>

A tenth embodiment of an optical switch will be described below.

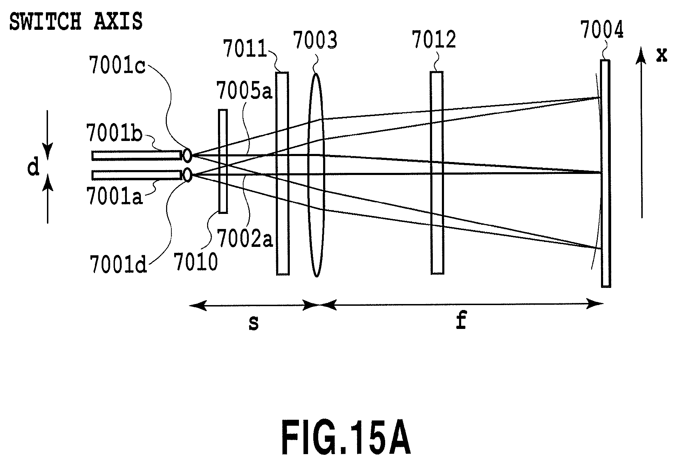

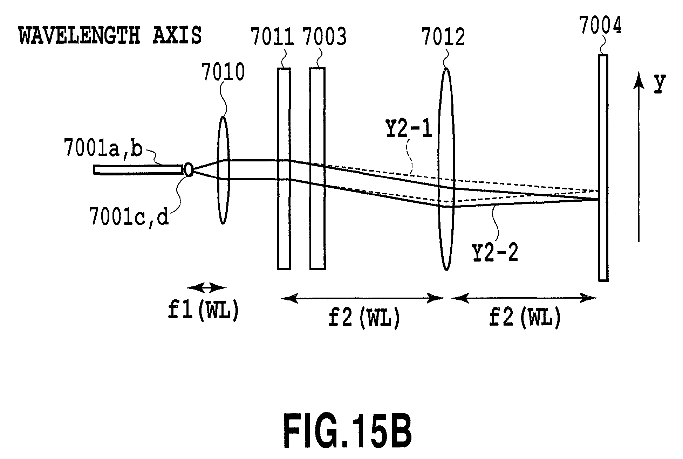

In a wavelength selective switch shown in Fig. 15, a dispersive element 7011 is arranged on an input side of a lens 7003. However, the arrangement of the lens 7003 and a diffractive grating (wavelength demultiplexing section) 7011 as a dispersive element may be reversed. In this case, the wavelength selective switch is characterized by dispersing the light intensity distribution on an LCOS 7004 to obtain a transmission spectrum with an appropriate wavelength property with no ripple. This embodiment will be described in conjunction with a case where, for example, a diffractive grating is used as a dispersive element. However, a prism or the like may be applied.

Fig. 15A and Fig. 15B are diagrams showing a configuration example of the wavelength selective switch of the present embodiment, where Fig. 15A shows a configuration in the switch axis direction and Fig. 15B shows a configuration in the wavelength axis direction. In Fig. 15A, x denotes the x axis shown in Fig. 3. In Fig. 15B, y denotes an axis orthogonal to the x axis.

The wavelength selective switch of the present embodiment is similar to the wavelength selective switch of the fourth embodiment (Fig. 8) except that the arrangement of the dispersive element 7011 and the lens 7003 is reversed. Except for this aspect, the configuration of the present embodiment is similar to the configuration of the fourth embodiment. That is, the wavelength selective switch of the present embodiment includes an input port 7001a, an output port 7001b, microlenses 7001c, 7001d, a lens 7003, a collimate lens 7010, the diffractive grating 7011 as a dispersive element, a focusing lens 7012, and a spatial light modulator 7004, as is the case with the fourth embodiment. In this embodiment, the spatial light modulator 7004 is described as, for example, LCOS, but for example, a grating light valve-based MEMS may also be applied. Furthermore, in this embodiment, a reflective LCOS is taken as an example, but a transmission type spatial light modulating element such as transmissive LCOS may be used.

An optical signal from the input port 7001a passes through the microlens 7001d and is output to a free space. In this case, in the switch axis direction shown in Fig. 15A, the optical signal propagates to the lens 7003 via the diffractive grating 7011. On the other hand, in the wavelength axis direction shown in Fig. 15B, the optical signal is converted into parallel light by the collimate lens 7010, and the parallel light propagates to the lens 7003 via the diffractive grating 7011.

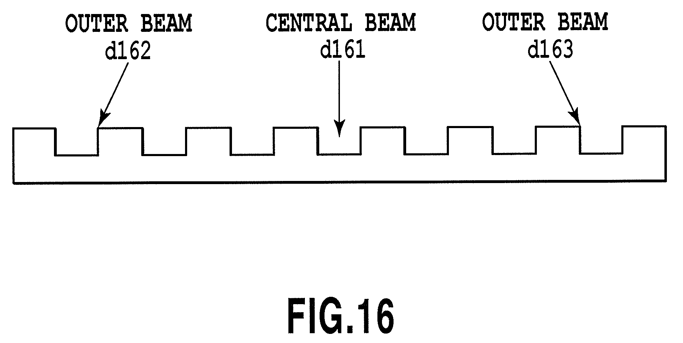

In Fig. 15, the optical signal output from the input port 7001 is input to the dispersive element 7011 as dispersive light. This is shown in Fig. 16.

Fig. 16 is a diagram illustrating how a beam enters the diffractive grating 7011. In Fig. 16, for an optical signal entering the diffractive grating 7011, a central ray (principal ray) d161 and outer rays (marginal rays) d162, d163 enter the diffractive grating 7011 at different angles. Rays between the central ray d161 and each of the outer rays d162, d163 enter the diffractive grating at intermediate angles between the corresponding incident angles.

In this case, a diffractive grating pitch (grating period) and a grating depth for the principal ray d161 are different from diffractive grating pitches (grating periods) and grating depths for the marginal rays d162, d163. Moreover, the principal ray d161 is different from the marginal rays d162, d163 in diffraction (dispersion) angle. As a result, a different beam pattern reaches the LCOS 7004 of the present embodiment via the diffractive grating 7011.

In Fig. 15B, the central ray of the dispersive light entering the diffractive grating 7011 propagates through a path Y2-1 indicated by a dashed line and enters the LCOS 7004. On the other hand, the outer rays are dispersed in a different manner by the diffractive grating and diffracted in directions different from the direction in which the central ray is diffracted. In the example in Fig. 15B, the outer ray propagates through a path Y2-2 indicated by a solid line and enters the LCOS 7004.

Such propagation paths of the central ray and the outer rays form a crescent-shaped intensity profile (intensity distribution) described below on the LCOS 7004.

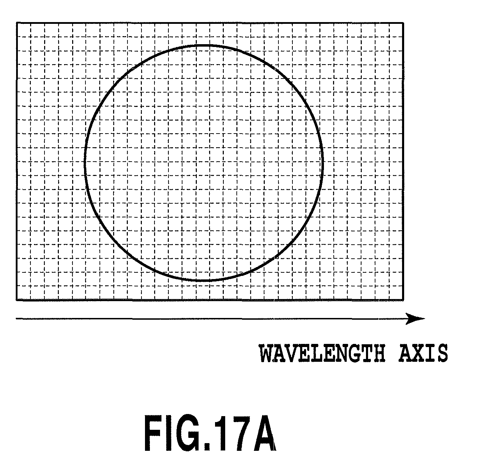

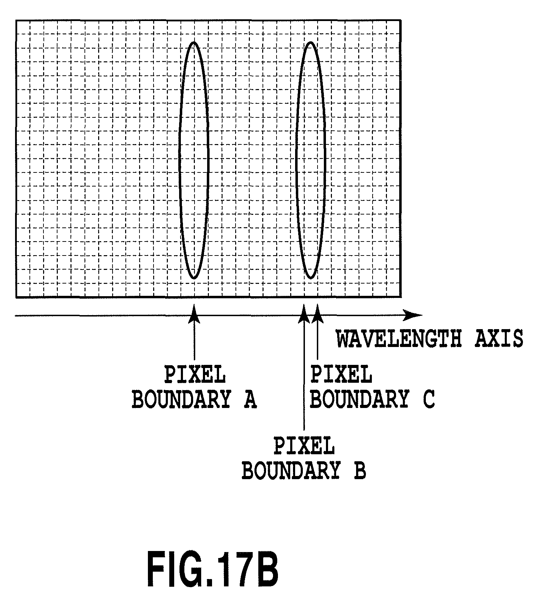

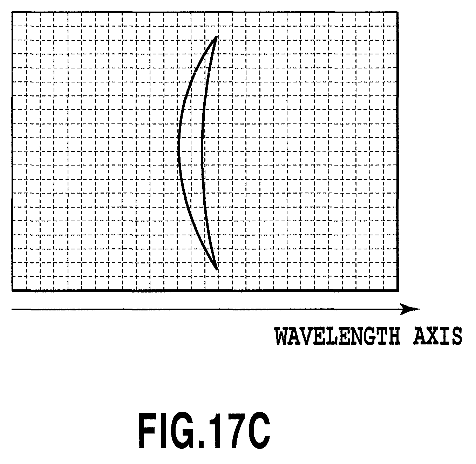

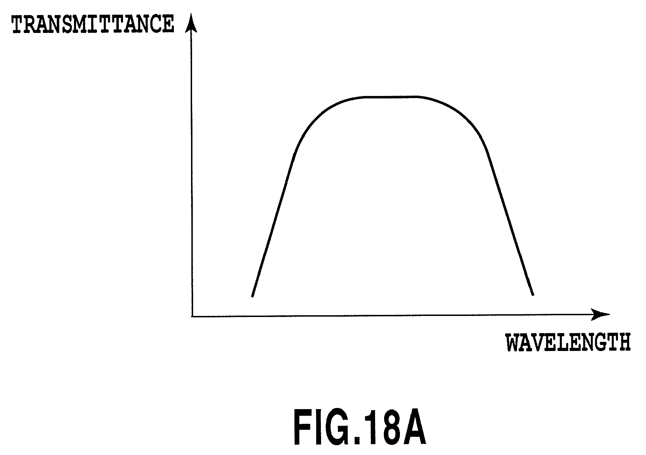

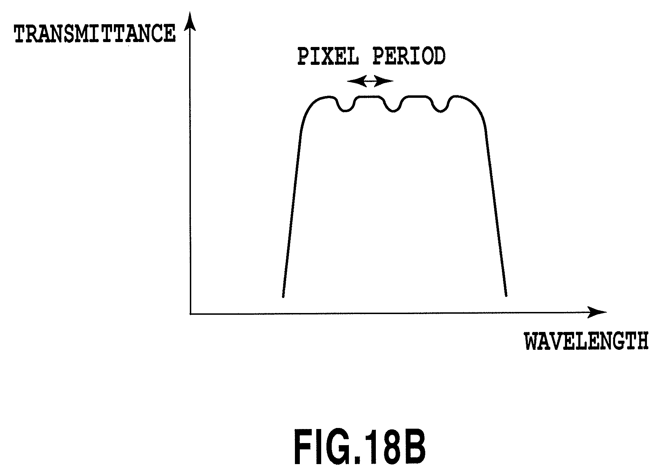

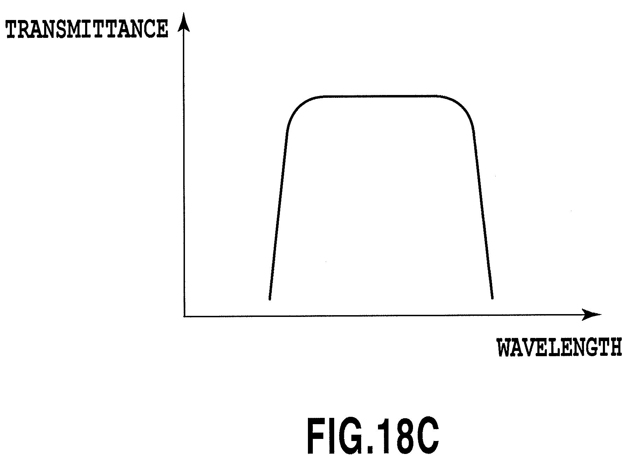

Now, the transmission property of a selected wavelength resulting from incidence of beams with different shapes on the LCOS 7004 will be described with reference to Fig. 17 and Fig. 18.

Figs. 17A to 17C show light intensity distributions of monochromatic light incident on the LCOS 7004, where Fig. 17A shows a case where the monochromatic light is a circular beam, Fig. 17B shows a case where two types of monochromatic light with different wavelengths are elliptic beams, and Fig. 17C shows a case where the monochromatic light is a crescent-shaped beam. Figs. 18A to 18B are diagrams illustrating the transmission properties of selected wavelengths obtained in the cases of incident light in Figs. 17A to 17C.

In Fig. 17A, the wavelength resolution is low. Thus, when a port switch pattern or an attenuation pattern is provided by the LCOS 7004, the resolution of the transmission spectrum decreases in association with the low wavelength resolution. The transmission property of the selected wavelength in this case corresponds to a dull shape and fails to exhibit an ideal transmission spectrum.

In Fig. 17B, an elliptic beam is incident in the wavelength axis direction, and a transmission spectrum with a high wavelength resolution is obtained as shown in Fig. 18B. The reason is as follows. Light with the same wavelength enters a reduced number of pixels, and for the same pixel, different types of light with different wavelengths are unlikely to overlap. This increases the wavelength resolution, thereby allowing the optical signal to be manipulated so as to have such a transmission spectrum as shown in Fig. 18B.

However, in Fig. 17B, ripples occur on the transmission property due to the periodic structure of the LCOS 7004. The cause of the ripples is the finite width of the gap between the pixels on the LCOS 7004.

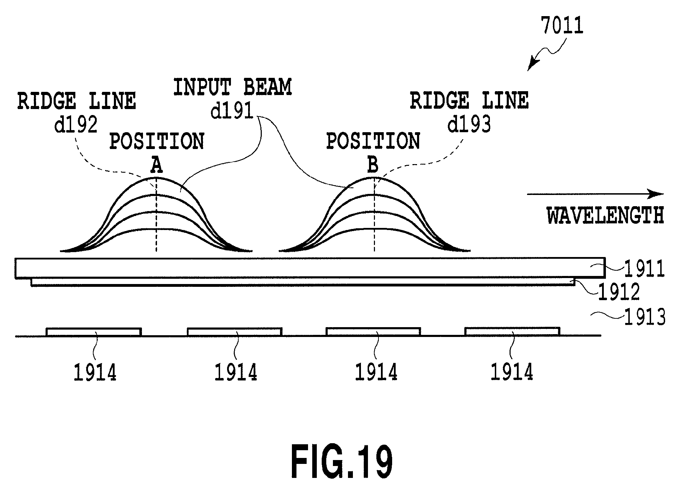

Now, the positional relation between the pixel structure of the LCOS 7004 and the input beam will be described with reference to Fig. 19. Fig. 19 is a diagram illustrating the positional relation between the pixel structure of the LCOS 7004 and the input beam.

In Fig. 19, a transparent electrode 1912 is configured under a glass substrate 1911, and a liquid crystal layer 1913 is formed between the transparent electrode 1912 and reflection electrodes 1914. The transparent electrode 1912 and the reflection electrodes 1914 apply a voltage to the liquid crystal layer 1913. The application of the voltage allows the LCOS 7004 to apply a predetermined phase to incident light.

In general, a smaller amount of light is reflected by the gap portion between the adjacent reflection electrodes 1914 than the amount of light reflected by each of the reflection electrodes 1914.

Here, upon passing through the diffractive grating 7011, optical signals with different wavelengths are diffracted in different directions. Thus, different wavelength components are incident on the LCOS 7004 at different portions.

In Fig. 19, d191 denotes the intensity distribution of light entering the LCOS, and ridge lines d192 and d193 represent ridge lines of the intensity distributions of different types of monochromatic light with different wavelengths.

For example, when an optical signal enters a position A, a pixel boundary on the LCOS 7004 coincides with a position corresponding to the maximum intensity of the beam. In this case, most of the incident light fails to effectively undergo phase modulation by the LCOS 7004. Moreover, in this case, the amount of light returning from the reflection electrodes 1914 decreases.

On the other hand, when an optical signal with a wavelength different from the wavelength of the optical signal entering the position A enters the LCOS 7004, for example, at a position B, the light intensity is maximized at a central position on the reflection electrode of the LCOS pixel. Thus, the intensity of reflected light is maximized. Moreover, the optical signal impinges on the reflection electrode 2014 and thus effectively undergoes the effect of phase modulation.

The effect of the phase modulation causes wavelength-dependent ripples on the transmission spectrum as shown in Fig. 18. In addition, due to the Kramers-Kronig relation, the ripples on the transmission property affect not only the intensity property but also the phase property of the optical signal. Here, when a transfer function for the transmission spectrum property is denoted by $H(\omega) = H_R(\omega) + i\,H_I(\omega)$, a relation expressed by Equation (13) is given.

[Math. 8]

$$H_I(\omega) = -\frac{1}{\pi}\mathcal{P}\int_{-\infty}^{\infty}\frac{H_R(\omega')}{\omega' - \omega}\,d\omega' \qquad (13)$$

In Equation (13), $\omega$: the angular frequency of the optical signal, $H_R(\omega)$: the amplitude property of an output electric field, and $H_I(\omega)$: the phase property.

From Equation (13), it is found that, when the amplitude property varies according to wavelength, the phase property also varies. Therefore, the phase property, that is, the dispersion property, of the optical signal is affected.

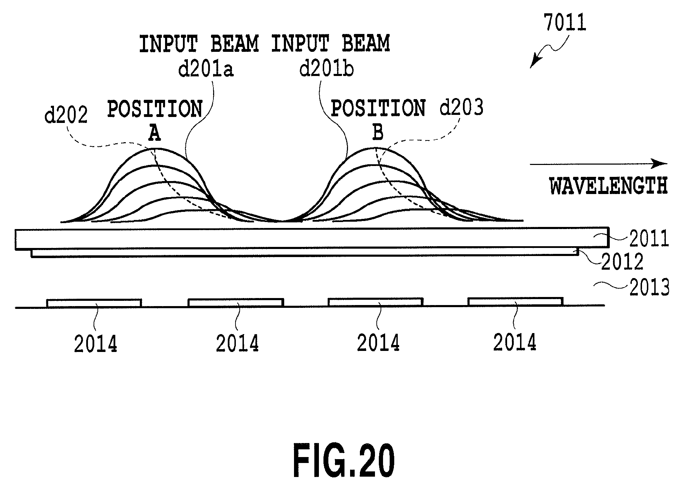

In Fig. 17C, the crescent-shaped beam enters the LCOS 7004, and thus, the beam end in the switch axis direction shifts in the wavelength axis direction. The transmission property in this case has such a value as shown in Fig. 18C. Fig. 20 shows the positional relation between the input beam on the LCOS 7004 and the pixel structure on the LCOS 7004 in the above-described case.

Fig. 20 is a diagram illustrating the positional relation between the pixel structure on the LCOS 7004 and the input beam. Fig. 20 shows a glass substrate 2011, a transparent electrode 2012, a liquid crystal layer 2013, and reflection electrodes 2014.

Ridge lines d202, d203 shown in Fig. 20 are formed by joining the maximum intensities of beams corresponding to positions in the switch axis direction.

As shown in Fig. 20, even when an input beam 201a is given as certain monochromatic light, the optical signal is arranged so as to be provided to a plurality of pixels along the wavelength axis direction. The ridge line d202 continuously changes in the wavelength direction, and thus, the pixel boundary provided to the light beam also continuously changes. Consequently, the adverse effect of a variation in the light intensity at the pixel boundary is averaged. In other words, as shown in Fig. 20, the ridge line d202 is set to be distributed in the direction of the wavelength axis (demultiplexing axis) (that is, a linear direction in which a surface of the LCOS 7004 and a demultiplexing surface are formed on the LCOS 7004). This indicates that the adverse effect of the light intensity at the pixel boundary is averaged.

Furthermore, in Fig. 20, even when the wavelength of the optical signal changes to change the incident position on the LCOS 7004 to the position B, the above-described averaging effect is weakened but does not disappear.

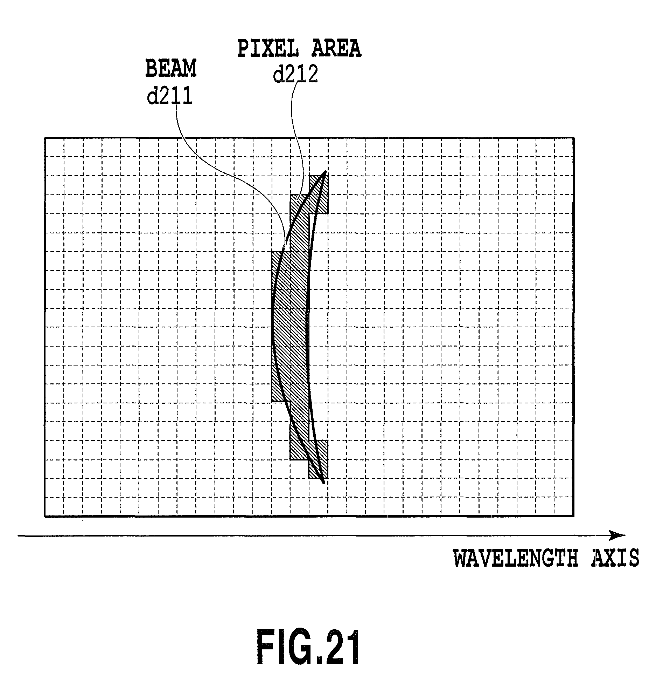

Moreover, to make the transmission spectrum steeper, it is preferable that a control pattern for the LCOS 7004 be set in accordance with the crescent shape shown in Fig. 21.

In Fig. 21, a crescent shape is set to be imparted to a pixel area d212 on the LCOS 7004 to which a crescent beam d211 forming monochromatic light with a wavelength at a boundary between WDM channels is provided (this is indicated by a shaded area in Fig. 21). Such control allows a steep roll-off property to be achieved at the channel boundary.

As described above, in the optical system of the present embodiment, the diffractive grating is pre-arranged such that, when an optical signal enters the LCOS 7004 via the diffractive grating 7011, the shape of the optical signal is asymmetric with respect to the axis in the LCOS 7004 surface orthogonal to the wavelength axis of the diffractive grating 7011. Thus, an excellent wavelength property with no ripple is obtained, preventing a reduction in bandwidth to enable provision of a wavelength selective switch with a very flat transmission spectrum. For example, even when the optical switch of the present embodiment is introduced into, for example, an optical transmission system, a transmission property is prevented from being degraded.

In this case, even when the pixel boundaries (the gaps between the reflection electrodes) on the LCOS (spatial phase modulating element) 7004 including the plurality of pixels are each large, the adverse effect of the pixel boundary on the optical signal can be reduced.

The diffractive grating 7011 is arranged so as to make the principal ray d161 and marginal rays d162, d163 contained in the optical signal incident at different angles (Fig. 16). Consequently, the beam pattern provided to the LCOS 7004 can be set, for example, as shown in Fig. 21.

[Variation]

In the above-described embodiments, the case has been illustrated where the principal ray of the optical signal output from the input port appears on the optical axis of the optical system. However, the optical switch is operative even when the arrangement of the input and output ports is changed, and thus, a similar configuration can be used when the principal ray does not appear on the optical axis of the optical system.

In the above-described embodiments, two or more input ports and/or two or more output ports may be provided.

Reference Signs List

2001a, 4001a, 6001a, 7001a Input port
2001b, 4001b, 6001b, 7001b Output port
2003 Lens
2004, 4004, 6004, 7004a Spatial light modulator
7011 Diffractive grating

**Claims**

1. An optical switch comprising:

   at least one input port;
   at least one output port;
   a wavelength demultiplexing section configured to perform wavelength demultiplexing on an optical signal from the input port; and
   a spatial light modulating section configured to deflect the wavelength-demultiplexed optical signal to the output port, and
   wherein the wavelength demultiplexing section is pre-arranged such that a shape of the optical signal of entering the spatial light modulating section is asymmetric with respect to an axis in the surface of the spatial light modulating section, the axis being orthogonal to a wavelength axis of the wavelength demultiplexing section.

2. The optical switch according to claim 1, wherein the spatial light modulating section is a spatial phase modulating element with a plurality of pixels.

3. The optical switch according to claim 1 or 2, wherein an intensity distribution corresponding to a monochromatic component forming the optical signal entering the spatial light modulating section is set such that a ridge line resulting from joining of maximum points of the intensity distribution is distributed with respect to the wavelength axis.

4. The optical switch according to any one of claims 1 to 3, wherein the optical signal includes a principal ray and a marginal ray, and the wavelength demultiplexing section is arranged such that the principal ray and the marginal ray are incident at different angles.

5. The optical switch according to any one of claims 1 to 4, wherein the optical switch comprises a lens having optical power only in a direction of a switch axis, the switch axis being an axis in the surface of the spatial light modulating section, and
   the lens is provided between the wavelength demultiplexing section and the spatial light modulator.

6. The optical switch according to any one of claims 1 to 5, wherein a control pattern for the spatial light modulating section is set according to channel boundaries for a wavelength division multiplexing signal.

# FIG.1

FIG.2

(a)

(b)

## FIG.3

**FIG.4**

EP 2 980 642 A1

**FIG.5**

5001

5001c

4001c

5001b

4001b

5001a

4001a

5001d

4001d

5001e

4001e

P

# FIG.6

**FIG.7**

SWITCH AXIS

FIG.8A

WAVELENGTH AXIS

7003 · 7011 7012 7004

7010

7013a

7001a,b

7001c,d

7013b

7013c

f1(WL)

f2(WL) f2(WL)

Y

# FIG.8B

FIG.9

**FIG.10A**

**FIG.10B**

FIG.11A

FIG.11B

EP 2 980 642 A1

FIG.12A

30

FIG.12B

**FIG.13**

FIG.14A

**FIG.14B**

SWITCH AXIS

FIG.15A

WAVELENGTH AXIS

7011 7003    7012    7004

7010

7001a,b

7001c,d

Y2-1

Y2-2

y

f1(WL)    f2(WL)    f2(WL)

# FIG.15B

OUTER BEAM      CENTRAL BEAM      OUTER BEAM
d162              d161              d163

**FIG.16**

WAVELENGTH AXIS

FIG.17A

WAVELENGTH AXIS

PIXEL
BOUNDARY A

PIXEL
BOUNDARY C

PIXEL
BOUNDARY B

FIG.17B

WAVELENGTH AXIS

FIG.17C

FIG.18A

FIG.18B

TRANSMITTANCE

WAVELENGTH

# FIG.18C

7011

RIDGE LINE
d192

INPUT BEAM
d191

RIDGE LINE
d193

POSITION
A

POSITION
B

WAVELENGTH

1911
1912
1913

1914    1914    1914    1914

# FIG.19

FIG.20

FIG.21

**FIG.22**

## INTERNATIONAL SEARCH REPORT

International application No.

PCT/JP2014/005445

A.   CLASSIFICATION OF SUBJECT MATTER
*G02F1/31*(2006.01)i, *G02F1/13*(2006.01)i

According to International Patent Classification (IPC) or to both national classification and IPC

B.   FIELDS SEARCHED

Minimum documentation searched (classification system followed by classification symbols)
G02F1/00-1/125, G02F1/29-1/315, G02F1/13

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
IEEE Xplore

C.   DOCUMENTS CONSIDERED TO BE RELEVANT

| Category* | Citation of document, with indication, where appropriate, of the relevant passages | Relevant to claim No. |
|---|---|---|
| X | WO 2014/061103 A1  (Sumitomo Electric Industries, Ltd.), 24 April 2014 (24.04.2014), paragraphs [0020] to [0036], [0040] to [0046], [0061], [0062]; fig. 1(a) to 2(c), 8(a) to 8(c) (Family: none) | 1-6 |
| X | WO 2014/157673 A1  (The Furukawa Electric Co., Ltd.), 02 October 2014 (02.10.2014), paragraphs [0078] to [0089]; fig. 17 to 19, 21 (Family: none) | 1-3,6 |

☒   Further documents are listed in the continuation of Box C.      ☐   See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| | |
|---|---|
| Date of the actual completion of the international search | Date of mailing of the international search report |
| 20 January 2015 (20.01.15) | 03 February 2015 (03.02.15) |
| Name and mailing address of the ISA/ Japan Patent Office 3-4-3,Kasumigaseki,Chiyoda-ku, Tokyo 100-8915,Japan | Authorized officer

Telephone No. |

Form PCT/ISA/210 (second sheet) (July 2009)

**INTERNATIONAL SEARCH REPORT**

International application No.

PCT/JP2014/005445

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2014-512569 A  (Cambridge Enterprise Ltd.),<br>22 May 2014 (22.05.2014),<br>entire text; all drawings<br>& EP 2686731 A1         & WO 2012/123715 A1<br>& CN 103443700 A        & KR 10-2014-0018281 A | 1-6 |
| A | P. M. Blanchard, et al., "Phase-diversity wave-front sensing with adistorted diffraction grating", APPLIED OPTICS, 2000.12.10, Vol.39, No.35, p.6649-6655 | 1-6 |
| A | P. M. Blanchard, et al., "Simultaneous multiplane imagingwith a distorted diffraction grating", APPLIED OPTICS, 1999.11.10, Vol.38, No.32, p.6692-6699 | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 7092599 B

**Non-patent literature cited in the description**

• **KENJI KONO ; GENDAI KOGAKUSHA.** *Basic and Applied Studies of Optical Coupling system for Optical Device,* 23-28